# EUROPÄISCHE PATENTSCHRIFT

(11) **EP 0 538 304 B1**
(45) Veröffentlichungstag und Bekanntmachung des Hinweises auf die Patenterteilung: **10.05.1995**
(21) Anmeldenummer: 91912412.3
(22) Anmeldetag: 09.07.1991
(51) Int. Cl.: D01H 4/12, F16C 39/06, F16C 32/06

(54) **ANTRIEB UND LAGER FÜR EINEN SCHAFTLOSEN OE-SPINNROTOR**
DRIVE AND BEARING FOR A SHAFTLESS OPEN-END SPINNING ROTOR
ENTRAINEMENT ET PALIER POUR ROTOR SANS ARBRE, DE FILATURE A FIBRE LIBEREE

(30) Priorität: 10.07.1990 SE 9002398
(43) Veröffentlichungstag der Anmeldung: 28.04.1993
(73) Patentinhaber: SKF Textilmaschinen-Komponenten GmbH, D-70376 Stuttgart (DE)
(72) Erfinder: LIND, Björn, S-427 00 Billdal (SE)
(86) Internationale Anmeldenummer: EP9101275
(87) Internationale Veröffentlichungsnummer: WO9201096

(56) Entgegenhaltungen:
- EP-A- 190 440
- EP-A- 302 314
- DE-A- 2 640 111
- DE-A- 3 000 357
- Patent Abstracts of Japan, vol. 10, No. 207 (M-500)(2263) 19 July 1986 & JP,A,61048613 (Ryuichi Matsuda) 10 March 1986

## Beschreibung

Eine derartige Vorrichtung ist aus der EP-B1 190 440 bekannt. Das kombinierte Magnet-Gaslager mit planparallelen Lagerflächen zeichnet sich durch extrem niedrige Reibungsverluste und durch eine radialkräftefreie Rotation des darauf gelagerten Spinnrotors um die Schwerachse im überkritischen Drehzahlbereich aus. Eine solche Vorrichtung eignet sich besonders für den Antrieb sehr schnell rotierender Spinnrotoren. Die bekannte Vorrichtung hat jedoch noch hohe elektromagnetische Antriebsverluste und unzulässig starke Schwingungen in kritischen Betriebszuständen, wodurch der Spinnrotor anstreifen könnte. Außerdem ist der Aufbau der Vorrichtung kostenaufwendig.

Aufgabe der Erfindung ist daher, diese Nachteile zu beseitigen und die Vorrichtung mit dem Magnet-Gaslager so zu verbessern, daß kritische Betriebszustände problemlos durchfahren werden können und der Betriebsdrehzahlbereich oberhalb der kritischen Drehzahl liegt.

Diese Aufgabe wird durch die Vorrichtung gemäß Anspruch 1 gelöst.

Der nutlose, hohlzylindrische Kern des Stators kann einfach hergestellt und bewickelt werden. Durch die mehrphasige, zum Spalt zwischen Statorstirnseite und der Lagerfläche des Spinnrotors mit flachem Querschnitt ausgeführte Wicklung entsteht verlustarm ein sehr homogenes, starkes Antriebsfeld. Die Ausbildung der Lagerfläche direkt in den Stirnflächen der Wicklung und eines Gasverteilers wirkt sich reduzierend auf den magnetischen Spalt und damit auf die magnetischen Verluste, die zwischen dem Kern und seinem als Läufer dienenden Spinnrotor entstehen, aus. Eine hohe Führungssteifigkeit des Spinnrotors wird durch die Gestaltung der Halte- und Zentriermagnete erreicht. Dadurch werden die Spinnrotorschwingungen auf den vorteilhaft elastisch aufgehängten Stator übertragen und können über ihn gedämpft werden.

Weitere Vorteile ergeben sich aus der nachfolgenden Beschreibung eines Ausführungsheispieles.

Es zeigen:

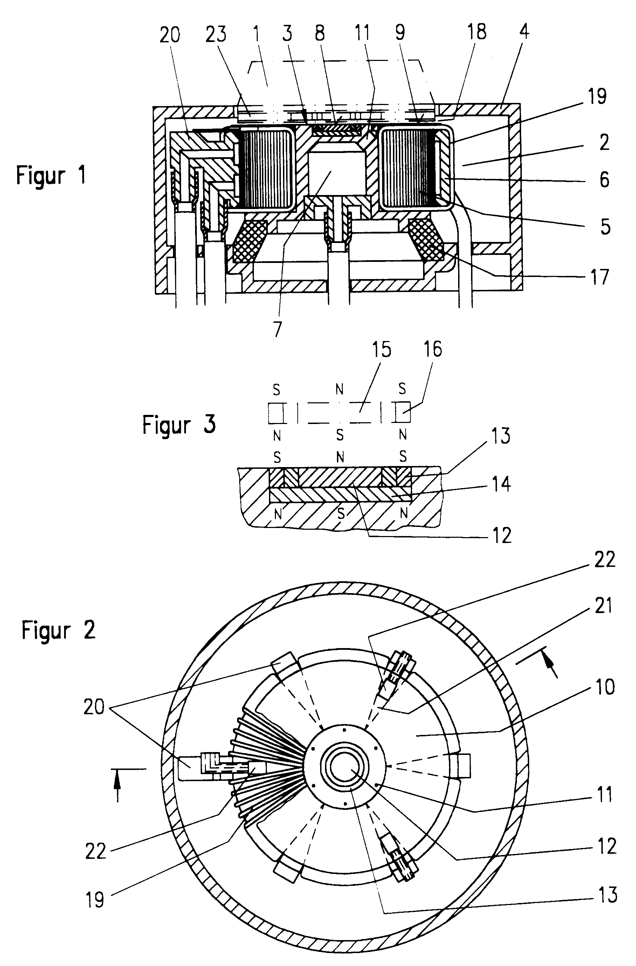

- Fig. 1: Schnitt durch die Vorrichtung;
- Fig. 2: Lagerfläche der Vorrichtung;
- Fig. 3: Ausschnitt aus dem Zentrum der Lagerfläche.

Die Vorrichtung zum Antrieb und lagern eines OE-Spinnrotors 1 besteht im wesentlichen aus folgenden Baugruppen: Dem Stator 2 mit dem integrierten kombinierten Magnet-Gaslager 3 und dem Gehäuse 4, das den Stator 2 trägt und auf nicht dargestellte Weise die Verbindung zur Spinnmaschine herstellt.

Der hohlzylindrische, nutlose Kern 5 des Stators 2 ist an seinem Außenzylinder von einem Kühlring 6 dicht umschlossen; beide sind zusammen bewickelt. In das Innere des bewickelten Kerns 5 ist ein Gasverteilungszylinder 7 so eingesetzt und vorzugsweise verklebt, daß seine Stirnfläche 8 in der Ebene der Wicklungsstirnfläche 9 liegt. Die Fügespalte und die Spalte zwischen den einzelnen Windungen sind vorzugsweise mit einer wärmeleitendein Vergußmasse zu einer planen Lagerfläche 10 hoher Oberflächenegüte ausgegossen. Die in die Lagerfläche 10 mündenen Düsenbohrungen 11 sind dicht am Rand der Stirnfläche 8 vom Gasverteilungszylinder 7 symmetrisch angeordnet. Im Zentrum der Stirnfläche 8 sind scheiben- und ringförmige Permanentmagnete als Halte- und Zentriermagnete 12; 13 konzentrisch zueinander und zur Statorachse mit wechselnder Polarität und mit radialer Distanz eingesetzt, und auf der der Lagerfläche 10 abgewandten Seite mittels Jochscheibe 14 verbunden. Diese Magnete 12; 13 wirken auf deckungsgleiche, jedoch umgekehrt gepolte Magnete im Spinnrotor 1.

Dadurch wird der Spinnrotor 1 mit hoher Steifigkeit auf seine magnetische Führungsachse zentriert und im Gleichgewicht mit der entgegengerichteten Kraft des Druckgases gehalten. So kann der druckabhängige sehr schmale Lagerspalt 18 des Magnet-Gaslagers 3 eingestellt werden. Durch die planparallelen Lagerflächen 10 auf der Vorrichtung und auf dem Spinnrotor 1 kann der Spinnrotor 1 im Betriebsdrehzahlbereich radialführungskräftefrei um seine Schwerachse rotieren und während des Betriebes in den Spinnrotor 1 eingebrachte Unwuchten vollständig ausgleichen. Gummielemente 17 oder Federstäbe, die den gesamten Stator 2 und den darauf mittels der Magnete 12, 13 führungssteif gelagerten Spinnrotor 1 elastisch im Gehäuse 4 aufhängen, dämpfen auch Spinnrotorschwingungen, beispielsweise bei eigenkritischen Drehzahlen. Die über die magnetische Führung übertragenen Schwingungen werden so weit durch Material - oder Friktionsdämpfung reduziert, daß der kritische Drehzahlbereich problemlos durchfahren werden kann.

Die Luftreibungswärme wird aus dem Lagerspalt 18 über den Kern 5 und über die Wicklung 19 zum Kühlring 6 abgeleitet, der eine Ringnut aufweist, durch die über eine Wicklungsteilerrippe 20 zu- und abgeführte Kühlflüssigkeit geleitet wird.

Durch die Wicklungsteilerrippen 20 entstehen zwischen den Wicklungsabschnitten auf der Stirnseite des Kerns 5 keilförmige Spalte 21, in die magnetische Sensoren 22 eingesetzt und mit der Lagerfläche 10 vergossen sind. Die Sensoren 22 werden von den Antriebsmagneten 23 des Spinnrotors überdeckt, können so deren Stellung erfassen und dienen der Ansteuerung der mehrphasigen Wicklung.

Durch die Verwendung von amorphem ferromagnetischem Material für den Ringbandkern werden die elektromagnetischen Verluste minimiert. Der magnetische Spalt zwischen Kern 5 und Spinnrotor 1 kann durch ein Flachprägen der wicklung 19 in der Statorstirnfläche reduziert und damit der magnetische Widerstand gesenkt werden.

Statt des beschriebenen kollektorlosen Gleichstrommotors als Axialfeldmotor kann auch ein Reluktanzmotor oder Asynchronmotor benutzt werden.

## Patentansprüche

1. Vorrichtung für eine Spinnmaschine mit dem Antrieb und dem Lager für einen schaftlosen OE-Spinnrotor (1), der den Läufer eines Axialfeldmotors bildet, wobei die Vorrichtung den Stator (2) des Axialfeldmotors und ein kombiniertes Magnet-Gaslager mit einem Haltemagneten (12) und mit planparallelen Lagerflächen (10) umfaßt,
dadurch gekennzeichnet, daß in den Stator (2) mit nutlosem, hohlzylindrischem Kern (5) und mit mehrphasiger, symmetrischer und im magnetischen Spalt zwischen Kern (5) und Spinnrotor (1) mit flachem Querschnitt ausgeführter Wicklung (19), achssymmetrisch eine Gasverteilung und die zentrisch angeordneten Halte-und Zentriermagnete (12; 13) so integriert sind, daß die dem OE-Spinnrotor (1) zugewandten Stirnflächen der Wicklung (19), der Gasverteilung und der Halte- und Zentriermagnete (12; 13) die antriebsseitige ebene Lagerfläche (10) bilden.

2. Vorrichtung nach Anspruch 1,
dadurch gekennzeichnet, daß in den Innenraum des nutlosen hohlzylindrischen und toroidal bewickelten Kerns (5) ein Gasverteilungszylinder (7) eingesetzt ist, der in seinem Zentrum die Halte- und Zentriermagnete (12, 13) trägt und dicht an seinem Außendurchmesser symmetrisch angeordnete, in die Lagerfläche (10) mündende Düsenbohrungen (11) aufweist und daß Fünge- und Wicklungsspalte wärmeleitend ausgegossen sind.

3. Vorrichtung nach Anspruch 1 oder 2,
dadurch gekennzeichnet, daß die Halte- und Zentriermagnete (12; 13) aus koaxial und mit radialer Distanz angeordneten scheiben-und ringförmigen Permanentmagneten wechselnder Polarität bestehen, die auf der von der Lagerfläche (10) abgewandten Seite durch eine Jochscheibe (14) verbunden sind und mit gleichen Magneten (15; 16) umgekehrter Polarität im Spinnrotor (1) zusammenwirken.

4. Vorrichtung nach einem der Ansprüche 1 bis 3,
dadurch gekennzeichnet, daß ein Kühlring (6) mit Ringnut und mit Wicklungsteilerrippen (20) den Kern (5) an seinem Zylindermantel dicht umschließt und mit ihm zusammen bewickelt ist und daß Kühlflüssigkeit in die Ringnut Über wenigstens eine der Wicklungsteilerrippen (20) zu- und abgeführt wird.

5. Vorrichtung nach einem der Ansprüche 1 bis 4,
dadurch gekennzeichnet, daß magnetische Sensoren (22) in keilförmige Spalte (21), die von Wicklungsteilerrippen (20) gebildet sind, eingesetzt und mit der Lagerfläche (10) vergossen sind.

6. Vorrichtung nach einem der Ansprüche 1 bis 5,
dadurch gekennzeichnet, daß Gummielemente (17) oder Federstäbe zur elastischen Aufhängung des Stators (2) vorgesehen sind und daß die Leitungen für Druckgas, Kühlmittel und Strom zum Stator (2) flexibel ausgebildet sind.

7. Vorrichtung nach einem der Ansprüche 1 bis 6,
dadurch gekennzeichnet, daß der Kern (5) als Ringbandkern aus amorphem, ferromagnetischem Material oder als Ring aus gesinterter Magnetkeramik ausgebildet ist.

8. Vorrichtung nach einem der Ansprüche 1 bis 7,
dadurch gekennzeichnet, daß ein kollektorloser Gleichstrommotor, ein Reluktanzmotor oder ein Asynchronmotor als Axialfeldmotor eingesetzt ist.

## Claims

1. Apparatus for a spinning machine having the drive and the bearing for a shaftless open-end spinning rotor (1) which forms the armature of an axial-field motor, the apparatus comprising the stator (2) of the axial-field motor and a combined magnetic/gas bearing with a holding magnet (12) and with plane-parallel bearing faces (10), characterized in that a gas distribution and the centrically arranged holding and centring magnets (12; 13) are integrated axially symmetrically into the stator (2), having a grooveless hollow-cylindrical core (5) and a multi-phase symmetrical winding (19) formed in the magnetic gap between the core (5) and spinning rotor (1) of flat cross-section, in such a way that those end faces of the winding (19), of the gas distribution and of the holding and centring magnets (12; 13) which confront the open-end spinning rotor (1) constitute the plane bearing face located on the drive side.

2. Apparatus according to Claim 1, characterized in that there is inserted into the interior of the groove-less hollow-cylindrical and toroidally wound core (5) a gas-distribution cylinder (7) which carries at its centre the holding and centring magnets (12, 13) and which has nozzle bores (11) symmetrically arranged close to its outside diameter and opening into the bearing face (10), and in that joining and winding gaps are filled so as to be thermally conductive.

3. Apparatus according to Claim 1 or 2, characterized in that the holding and centring magnets (12; 13) consist of disc-shaped and annular permanent magnets of alternating polarity which are arranged coaxially and at a radial distance from one another and which are connected by means of a yoke disc (14) on the side remote from the bearing face (10) and cooperate with identical magnets (15; 16) of opposite polarity in the spinning rotor (1).

4. Apparatus according to one of Claims 1 to 3, characterized in that a cooling ring (6) having an annular groove and having winding divider ribs (20) sealingly surrounds the core (5) on its outer cylindrical surface and is wound together with it, and in that cooling fluid is fed into the annular groove and discharged from the latter via at least one of the winding divider ribs (20).

5. Apparatus according to one of Claims 1 to 4, characterized in that magnetic sensors (22) are inserted into wedge-shaped gaps (21) formed by winding divider ribs (20) and are cast together with the bearing face (10).

6. Apparatus according to one of Claims 1 to 5, characterized in that rubber elements (17) or spring bars are provided for the elastic suspension of the stator (2), and in that the conduits for compressed gas, coolant and current to the stator (2) are of flexible design.

7. Apparatus according to one of Claims 1 to 6, characterized in that the core (5) is designed as a toroidal tape core consisting of amorphous ferromagnetic material or as a ring consisting of sintered magnetic ceramic.

8. Apparatus according to one of Claims 1 to 7, characterized in that a commutatorless direct-current motor, a reluctance motor or an asynchronous motor is used as an axial-field motor.

## Revendications

1. Dispositif pour un métier à filer avec le mécanisme d'entraînement et le palier pour un rotor de filature à fibre libérée sans arbre (1), qui forme l'induit d'un moteur à champ axial, dans lequel le dispositif comprend le stator (2) du moteur à champ axial et un palier combiné magnétique-gazeux avec un aimant d'arrêt (12) et avec des faces de palier planes parallèles (10), caractérisé en ce que dans le stator (2) avec un noyau cylindrique creux (5) sans encoches et avec un enroulement (19) multiphasé, symétrique et exécuté avec une section plate dans l'entrefer magnétique entre le noyau (5) et le rotor de filature (1), sont intégrés avec une symétrie axiale une distribution de gaz et les aimants d'arrêt et de centrage (12; 13) disposés centralement de telle sorte que les faces frontales de l'enroulement (19), de la distribution de gaz et des aimants d'arrêt et de centrage (12; 13) tournées vers le rotor de filature à fibre libérée (1) forment la surface de palier plane (10) située du côté du mécanisme d'entraînement.

2. Dispositif suivant la revendication 1, caractérisé en ce que dans le volume intérieur du noyau (5) cylindrique creux sans encoches et à enroulement toroïdal est placé un cylindre (7) de distribution de gaz, qui porte en son centre les aimants d'arrêt et de centrage (12; 13) et présente près de son diamètre extérieur des trous d'ajutage (11) disposés symétriquement débouchant dans la surface de palier (10) et en ce que des fentes de joint et d'enroulement sont comblées par moulage conducteur de la chaleur.

3. Dispositif suivant la revendication 1 ou 2, caractérisé en ce que les aimants d'arrêt et de centrage (12; 13) se composent d'aimants permanents en forme de disque et d'anneau, à polarité alternative, disposés coaxialement et avec une distance radiale, qui sont reliés par un disque d'armature (14) sur le côté situé à l'opposé de la face de palier (10) et qui coopèrent avec des aimants identiques (15; 16) de polarité opposée dans le rotor de filature (1).

4. Dispositif suivant l'une des revendications 1 à 3, caractérisé en ce qu'un anneau de refroidissement (6) avec une rainure annulaire et avec des nervures (20) de division de l'enroulement entoure le noyau (5) près de sa surface latérale cylindrique et est garni d'un enroulement en même temps que celui-ci et en ce qu'un liquide de refroidissement est introduit dans et évacué hors de la rainure annulaire par au moins une des nervures (20) de division de l'enroulement.

5. Dispositif suivant l'une des revendications 1 à 4, caractérisé en ce que des détecteurs magnétiques (22) sont placés dans des fentes (21) en forme de coin, qui sont formées par des nervures (20) de division de l'enroulement, et sont moulés avec la surface de palier (10).

6. Dispositif suivant l'une des revendications 1 à 5, caractérisé en ce qu'il est prévu des éléments de caoutchouc (17) ou des barres de ressorts pour la suspension élastique du stator (2) et en ce que les conduites pour le gaz sous pression, l'agent de refroidissement et le courant vers le stator (2) sont flexibles.

7. Dispositif suivant l'une des revendications 1 à 6, caractérisé en ce que le noyau (5) est constitué par un noyau plat annulaire en matière ferromagnétique amorphe ou par un anneau en céramique magnétique frittée.

8. Dispositif suivant l'une des revendications 1 à 7, caractérisé en ce qu'un moteur à courant continu sans collecteur, un moteur à reluctance ou un moteur asynchrone est monté en qualité de moteur à champ axial.
